# EUROPEAN PATENT SPECIFICATION

(11) **EP 2 025 692 B1**
(45) Date of publication and mention of the grant of the patent: **26.09.2012**
(21) Application number: 08012987.7
(22) Date of filing: 18.07.2008
(51) Int. Cl.: C08G 18/08, C08G 18/12, C08G 18/73, C08G 18/75, C09K 3/10

(54) **Polyurethane dispersions for sealants**
Polyurethan-Dispersionen für Dichtungen
Dispersions de polyuréthane pour joints d'étanchéité

(30) Priority: 24.07.2007 US 880747
(43) Date of publication of application: 18.02.2009
(73) Proprietor: Bayer MaterialScience LLC, Pittsburgh, PA 15205 (US)
(72) Inventor: Berezkin, Yuliya, Pittsburgh PA 15241 (US); Schmitt, Peter D., PA 15009-1062 (US); Gindin, Lyubov K., Pittsburgh PA15228 (US); Pethiyagoda, Dinesh, Philadelphia PA 19130 (US); Crawford, Derek L., Mars PA 16046 (US)
(74) Representative: Marx, Thiemo Patrick

(56) References cited:
- EP-A- 0 741 152
- US-A1- 2006 264 568
- US-B1- 6 610 779

## Description

### FIELD OF THE INVENTION

The present invention relates to aqueous polyurethane dispersions prepared isocyanate-terminated prepolymers, and the use of such dispersions in sealants.

### BACKGROUND INFORMATION

Sealants are widely used in building materials as waterproofing agents, environmental barriers, and to accommodate changes in the size of materials due to thermal, moisture and structural movements, including vibration and creep.

Polyurethane sealant compositions typically comprise at least one urethane prepolymer. Sealants useful for bonding to non-porous substrates, such as glass are described, for example, in U.S. Patent No. 4,374,237 and U.S. Patent No. 4,687,533, both incorporated herein by reference. U.S. Patent No. 4,374,237 describes a polyurethane sealant containing urethane prepolymers which have been further reacted with secondary amine compounds containing two silane groups. U.S. Patent No. 4,687,533 describes a polyurethane sealant containing urethane prepolymers which contain silane groups. Other patents have described the use of high molecular weight polyols in polyurethanes, including CA 2,175,403 and U.S. Patent No. 5,124,425.

Anionic polyurethane dispersions typically contain polyhydric components having molecular weights up to 3000. Prior to the invention, it was not possible to achieve good compatibility between soft and hard segments of the polyurethane dispersion containing higher molecular weight polyether diols. Poor compatibility resulted in weak film properties.

### SUMMARY OF THE INVENTION

Polyurethane dispersions of the invention allow incorporation of higher molecular weight polyethers that result in film properties with exceptional flexibility, strength and clarity. It was discovered that the use of low molecular weight polyether or polyester polyols in combination with hydroxyalkane carboxylic acids make it possible to incorporate high molecular weight polyether diols. The resulting PUD is stable, providing good visco-elastic film properties that were previously unattainable. The PUDs obtained also have ultra-low or no co-solvent.

In one embodiment, the present invention provides an aqueous polyurethane dispersion prepared from an isocyanate-terminated prepolymer having an isocyanate group content of 2 to 7% by weight, the prepolymer comprising the reaction product of
a) at least one polyether diol having a number average molecular weight of 3000 to 5000;
b) at least one active-hydrogen containing material having a number average molecular weight of 200 to 700 and containing two or three hydroxyl groups and optionally one carboxy group;
c) at least one hydroxyalkane carboxylic acid having a number average molecular weight of less than 200;
d) optionally, a polyether monol having a number average molecular weight between 400-3,000;
e) optionally, a polyether triol having a number average molecular weight of 3,000 to 9,000; and
f) an aliphatic and/or cycloaliphatic diisocyanate,

the aqueous polyurethane dispersion being optionally chain extended and having at least a portion of any carboxylic acid groups neutralized.

In another embodiment, the present invention provides an aqueous polyurethane dispersion prepared from an isocyanate-terminated prepolymer having an isocyanate group content of 2 to 7% by weight, the prepolymer comprising the reaction product of
a) at least one polyether diol having a number average molecular weight of 3000 to 5000;
b) at least one active-hydrogen containing material having a number average molecular weight of 200 to 700 and containing two or three hydroxyl groups and optionally one carboxy group;
c) at least one hydroxyalkane carboxylic acid having a number average molecular weight of less than 200;
d) optionally, a polyether monol having a number average molecular weight between 400-3,000;
e) optionally, a polyether triol having a number average molecular weight of 3,000 to 9,000; and
f) an aliphatic and/or cycloaliphatic diisocyanate,

the aqueous polyurethane dispersion being optionally chain extended and having at least a portion of any carboxylic acid groups neutralized.

Prepolymers prepared as above can be incorporated into dispersions by dispersing the prepolymers in water, with neutralization of the prepolymer prior to creation of the dispersion. Optionally, the prepolymer can be chain extended after dispersion in water.

Thus, in an additional aspect, the present invention provides a process for preparing an aqueous polyurethane dispersion comprising:
A) preparing an isocyanate-terminated prepolymer having an isocyanate group content of 2 to 7% by weight, wherein the prepolymer is the reaction product of
   a) at least one polyether diol having a number average molecular weight of 3000 to 5000;
   b) at least one active-hydrogen containing material having a number average molecular weight of 200 to 700 and containing two or three hydroxyl groups and optionally one carboxy group;
   c) at least one hydroxyalkane carboxylic acid having a number average molecular weight of less than 200;
   d) optionally, a polyether monol having a number average molecular weight between 400-3,000;
   e) optionally, a polyether triol having a number average molecular weight of 3,000 to 9,000; and
   f) an aliphatic and/or cycloaliphatic diisocyanate;
B) neutralizing at least a portion of any carboxylic acid groups;
C) dispersing the prepolymer in water;
D) optionally adding a polyamine chain extender to the water after addition of
the prepolymer.

### Component (a)

Suitable polyether diols include, for example, the polyaddition products of ethylene oxide, propylene oxide, tetrahydrofuran, butylene oxide and epichlorohydrin, as well as co-addition and graft products thereof, as well as polyether diols obtained by condensation of dihydric alcohols or mixtures thereof and the polyether diols obtained by alkoxylation of dihydric alcohols, amines and aminoalcohols.

Examples of suitable dihydric alcohols include diols having a molecular weight of 62 to 2000 which optionally contain ether groups, ester groups and/or carbonate groups. Preferred alcohols include ethylene glycol, 1,2- and 1,3-propanediol, 1,3- , 2, 3- and 1,4-butanediol, 1,6-hexanediol, diethylene glycol, dipropylene glycol, neopentyl glycol and mixtures of these diols. Other suitable diols include ethanediol, 1,5-pentanediol, 2,2-dimethyl-1,3-propanediol, 1,4-dihydroxycyclohexane, 1,4-dimethylolcyclohexane, 1,8-octanediol, 1,10-decanediol, 1,12-dodecanediol, triethylene glycol, tetraethylene glycol, tripropylene glycol, tetrapropylene glycol, polycarbonate diols having hydroxyl numbers of 56 to 168 (which may be obtained by reacting any of the preceding diols with diphenyl carbonate, dimethyl carbonate, diethylene glycol carbonate or phosgene), and dimeric fatty alcohols. Cycloaliphatic dihydroxyl compounds are also suitable as the dihydric alcohol(s). Mixtures of any of the preceding diols can also be used.

The term "dimeric fatty alcohol" means diols which can be obtained from technical dimerized fatty acids. Dimerized fatty acids are those containing at least 75% by weight of dimeric acids, i.e., dicarboxylic acids having an average of 30 to 45 carbon atoms per molecule. The conversion of the dimeric fatty acids into dimeric fatty alcohols can be carried out, for example, by reduction of the carboxyl groups to hydroxyl groups, esterification of the carboxyl groups with the previously described low molecular weight diols or by alkoxylation of the carboxyl groups, for example, by means of ethylene oxide and/or propylene oxide. An example of a dimeric fatty alcohol suitable for use in preparing the polyether diol is Pripol 2033 from Unichema.

Particularly preferred polyether diols are based on one or more polyoxypropylene diols having number average molecular weights of 3000 to 5000 and having an unsaturated terminal group content of less than or equal to 0.02 milliequivalents, preferably from 0.005 to 0.015 milliequivalents (method used for determination ASTM D2849-69) per gram polyol, which are obtained by known methods by double metal cyanide complex-catalyzed (DMC-catalyzed) polymerization of alkylene oxides, preferably propylene oxides, such as are described, for example, in U.S. patent 5,158,922 (e.g., Example 30) or European patent 654,302 (p. 5, line 26 to p. 6, line 32). A particularly preferred diol is Acclaim® 4200 N, available from Bayer AG, Leverkusen, Germany.

### Component (b)

Examples of component (b), the low molecular weight active-hydrogen containing material include low molecular weight polyether polyols, prepared as described above, and polyester polyols, known per se, which are synthesized from alcohols and dicarboxylic acids. Examples of suitable alcohols include those listed above for preparation of the polyether diols.

Examples of suitable dicarboxylic acids are aromatic dicarboxylic acids such as phthalic acid, isophthalic acid and terephthalic acid, cycloaliphatic dicarboxylic acids such as hexahydrophthalic acid, tetrahydrophthalic acid, endomethylene-tetrahydrophthalic acid and their anhydrides and aliphatic dicarboxylic acids, which are used with preference, such as succinic acid, glutaric acid, adipic acid, phthalic acid, isophthalic acid, tetrahydrophthalic acid, suberic acid, azelaic acid and sebacic acid or their anhydrides.

Preferably, the low molecular weight active hydrogen-containing material has a number average molecular weight of 200 to 700 and contains two or three hydroxyl groups and optionally one carboxy group.

The polyester polyols may also be homopolymers or copolymers of lactones, which are preferably obtained by addition reactions of lactones or lactone mixtures, such as butyrolactone, ε-caprolactone and/or methyl-ε-caprolactone with the suitable difunctional and/or higher-functional starter molecules such as, for example, the low molecular weight polyhydric alcohols mentioned above as structural components for polyester polyols. The corresponding polymers of ε-caprolactone are preferred.

Preferred are polyester polyols, and in particular polycaprolactone diols of average molecular weight range from 200 to 700 which have been prepared in a manner known per se from a diol or diol mixture of the type exemplified above, as starter, and ε-caprolactone. The preferred starter molecules are dimethylol butanoic acid (DMBA) and dimethyl propionic acid (DMPA).

### Component (c)

As component (c), hydroxyalkane carboxylic acids having a number average molecular weight of less than 200 are used as a component of the prepolymer. Suitable compounds have at least one hydroxyl group and at least one carboxyl group. Examples of these compounds include dimethylolacetic acid, dimethylolpropionic acid, dimethylolbutyric acid, dimethylolvaleric acid, citric acid and tartaric acid. Preferred are dimethylolpropionic acid and dimethylolbutyric acid.

### Component (d)

Preferred polyether monols have a number average molecular weight of 400 to 3,000, more preferably 1500 to 2500, and are prepared as described above for polyether diols, using suitable monofunctional alcohols.

Examples of monofunctional alcohols include methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n- octadecanol, cyclohexanol, the isomeric methylcyclohexanols, hydroxymethyl- cyclohexane, 3-ethyl-3-hydroxymethyloxetane or tetrahydrofurfuryl alcohol; diethylene glycol monoalkyl ethers such as diethylene glycol monobutyl ether; unsaturated alcohols such as allyl alcohol, 1, 1-dimethylallyl alcohol or oleyl alcohol; aromatic alcohols (phenols) such as phenol, the isomeric cresols or methoxyphenols; and araliphatic alcohols such as benzyl alcohol, anisyl alcohol or cinnamyl alcohol.

### Component (e)

Preferred polyether triols have a number average molecular weight of 3,000 to 9,000, more preferably 5,000 to 7,000, and are prepared as described above for polyether diols, using suitable trihydric alcohols. Suitable triyhric alcohols include, for example, trimethylolethane, trimethylolpropane and glycerol and mixtures of these.

### Component (f)

Suitable isocyanates include any linear or branched aliphatic or cycloaliphatic organic compound which have at least two free isocyanate groups per molecule, such as, for example, diisocyanates X(NCO)₂, with X representing a bivalent aliphatic hydrocarbon radical having from 4 to 12 carbon atoms, a bivalent cycloaliphatic hydrocarbon radical having from 6 to 15 carbon atoms. Further examples of compounds which are usable as a diisocyanate component are described, for example, by W. Siefken in Justus Liebig's Annalen der Chemie, 562, pp. 75-136.

Some non-limiting examples of diisocyanates are tetramethylene diisocyanate, methylpentamethylene diisocyanate, 1,6-hexamethylene diisocyanate, dodecamethylene diisocyanate, 1,4-diisocyanatocyclohexane, 1-isocyanato-3,3,5-trimethyl-5-isocyanatomethylcyclohexane, p-isopropylidene diisocyanate, 1-isocyanato-3,3,5-trimethyl-5-isocyanatomethyl cyclohexane, 1,6-hexamethylene diisocyanate, and 4,4'-diisocyanatodicyclohexylmethane. Mixtures of these diisocyanates can also be used. Preferred are isophorone diisocyanate and hexamethylene diisocyanate.

It is naturally also possible to (co-) use small amounts of the higher-functional polyisocyanates which are known in polyurethane chemistry and modified polyisocyanates having, for example, carbodiimide groups, allophanate groups, isocyanurate groups, urethane groups and/or biuret groups.

Preparation of the prepolymer takes place within the temperature range 20 to 130°C, preferably between 50 and 120°C, most preferably between 70 and 105°C. The isocyanate, diol, hydroxy alkane carboxylic acid and active hydrogen-containing material, and triol and monol, when used, are reacted in a ratio such that ratio of isocyanate groups to hydroxyl groups is 1:4, more preferably 1:2.

Optionally, a solvent which is inert towards isocyanate groups can be used in the preparation of the prepolymer. Examples of suitable solvents are the typical paint solvents that are known per se, such as ethyl acetate, butyl acetate, ethylene glycol monomethyl or monoethyl ether acetate, 1-methoxyprop-2-yl acetate, 3-methoxy-n-butyl acetate, acetone, 2-butanone, 4-methyl-2-pentanone, cyclohexanone, toluene, xylene, chlorobenzene, mineral spirits, aromatics with relatively high levels of substitution, of the kind on the market, for example, under the names Solvent naphtha, Solvesso^{™}, Isopar^{™}, Nappar^{™} (Deutsche EXXON CHEMICAL GmbH, Cologne, Del.) and Shellsol^{™} (Deutsche Shell Chemie GmbH, Eschbom, Del.), carbonic esters, such as dimethyl carbonate, diethyl carbonate, 1,2-ethylene carbonate and 1,2-propylene carbonate, lactones, such as β-propiolactone, γ-butyrolactone, ε-caprolactone and ε -methylcaprolactone, and also solvents such as propylene glycol diacetate, diethylene glycol dimethyl ether, dipropylene glycol dimethyl ether, diethylene glycol ethyl and butyl ether acetate, N-methylpyrrolidone, N-ethylpyrrolidone and N-methylcaprolactam, or any desired mixtures of such solvents. Preferred are N-methylpyrrolidone and diethylene glycol dimethyl ether, when a solvent is used.

Components a), b) and c) are present in the following amounts: a) 30-80 wt. %, preferably 50-70 wt. %; b) 3-15 wt. %, preferably 5-10 wt. %; c) 1-20 wt. %, preferably 1.5-10 wt. %, all weight percentages based on the weight of the prepolymer. Component d), monol, is present in amounts from 0 - 40 wt. %, more preferably 2 - 5 wt. %, and component e), triol, is present in amounts from 0 - 15 wt. %, more preferably 2 - 10 wt. %.

Generally, the ratio of the components is such that the isocyanate group content of the resulting prepolymer(s) is between 2 and 7 wt. %, preferably between 2 and 4 wt. %, based on the weight of the prepolymer.

Prior to dispersion in water, at least a portion of the free carboxylic acid groups in the prepolymer composition are neutralized with a neutralizing agent. At least 50%, preferably from 80% to 120%, with particular preference from 95 to 100%, of the carboxylic acid groups present in the polyurethane of the invention are neutralized with suitable neutralizing agents.

Examples of suitable neutralizing agents include triethylamine, dimethylamino-ethanol, dimethylcyclohexylamine, triethanolamine, methyldiethanolamine, diisopropanolamine, diisopropylcyclohexylamine, N-methylmorpholine, 2-amino-2-methyl-1-propanol, ammonia or other customary neutralizing agents or neutralization mixtures thereof. Preferred is triethylamine.

The prepolymer according to the invention may then be converted into an aqueous dispersion.

The neutralized prepolymer is dispersed in water, optionally in the presence of a surfactant or emulsifier. Suitable surfactants and emulsifiers are well-known in the art. Up to about 10% by weight surfactant can be used, based on the amount of water added. Also optionally, additional solvent can be added to the prepolymer prior to dispersion in water.

The prepolymer composition can optionally be chain-lengthened after dispersion in water to obtain the high molecular weight polyurethane resin. If the acetone process is used, chain extension can be carried out prior to dispersion.

Suitable chain extenders include, for example, aliphatic and/or alicyclic primary and/or secondary diamines including 1,2-ethanediamine, 1,6-hexamethylenediamine, 1-amino-3,3,5-trimethyl-5-aminomethyl cyclohexane (isophorone diamine), piperazine, 1,4-diaminocyclohexane, bis(4-aminocyclohexyl) methane, adipic acid dihydrazide or hydrazine hydrate. Polyether diamines, which may be prepared by reaction of the corresponding polyether diols with ammonia and/or primary amines, are also useful, as are higher-functional amines such as tri- or tetrafunctional amines. Preferred chain extenders are diamines, such as 2-methyl-1,5-diaminopentane (Dytek^{™} A, sold by Dupont). Mixtures of any of the preceding chain extenders can also be used.

The organic solvent may optionally be distilled off in whole or in part at reduced pressure. The quantity of water is such that the resultant aqueous dispersions comprise from 30 to 60 wt.%, preferably 35 to 50 wt.%, solids.

The aqueous dispersions of the invention have an average particle diameter (measured by laser correlation spectroscopy) of from 50 to 900 nm, preferably 60 to 150 nm, and are stable in storage for at least 6 months.

The dispersions of the invention may be processed by conventional processes to obtain films, foils, surface coatings, coatings, finishes and for impregnation of the most widely varied substrates. The dispersions are particularly suitable for the production of sealants.

The polyurethane dispersions of the invention may also, depending on their intended use, contain conventional auxiliary agents and additives, such as, for example, cross-linking agents, plasticizers, pigments, defoaming agents, soft-feel additives or fillers.

Sealant formulations in particular will contain 5-50% filler and 5-50% plasticizer, the remainder of the formulation being the polyurethane dispersion and minor amounts of other additives such as thixotropic agents, flow control agents, surfactant/emulsifier, and other conventional additives.

It is likewise possible to combine the aqueous dispersions of the invention, with other dispersions such as, for example, polyacrylate dispersions, natural and synthetic rubber latices such as, for example, NBR (nitrile-butadiene rubber), chloroprene or other homopolymers and copolymers such as, for example, ethyl vinyl acetate or ethyl vinyl alcohol.

The invention is further illustrated but is not intended to be limited by the following examples in which all parts and percentages are by weight, unless otherwise specified.

### EXAMPLES

The following examples are intended to illustrate the invention and should not be construed as limiting the invention in any way.

### Example 1:

232.16 g of Acclaim 4200 (PPO polyether diol, 4K Mwt), 26.12 g of Acclaim 6300 (PPO polyether triol, 6K M. wt), 41.78g of Dicap 600 (polycaprolactone polyester diol with a pendant carboxylic group, 600M.wt.), 6.67g DMBA (dimethylolbutanoic acid) and 44.35 g of NMP (N-methyl-2-pyrrolidinone) were mixed at room temperature in the 1 liter round bottom three neck flask, equipped with heating mantle, condenser, stirring rod and nitrogen outlet. The mixture was heated to 70°C and stirred until it became homogenous and clear. 51.11g of Desmodur I (isophorone diisocyanate) and 16.80g of Desmodur H (hexamethylene diisocyanate) were added into the flask. The mixture remained clear. The reaction proceeded at 95°C till actual % NCO reached 3.00 % (theoretical NCO was calculated at 2.99%). The prepolymer was neutralized with 11.8g of TEA (triethylamine) at 68°C. 485 g of distilled water (DIW) at 46°C and 5 drops of Surfanol 104H (external surfactant) were added into dispersion flask. The prepolymer at 68°C was slowly dispersed into water under agitation at 500 rpm. Fine dispersion was obtained. 7.63 g of EDA (ethylenediamine) were mixed with 16.05 g of DIW; the solution then was added dropwise into the dispersion. The resultant PUD was stable, having 36.3 % solids, average particle size 120nm, viscosity of 1 Pa.s (1000 cps).

PUD formed a clear film on the glass.

The film made of this PUD exhibited the following properties:
Tensile strength 131.0 bar (1900 psi)
100% Modulus 23.8 bar (345 psi)
Elongation 807 %
Tear strength 22.2 N/mm (127 pli)

Incorporation of Dicap 600 provided good compatibility between soft and hard segments in the prepolymer. Hard segment content on total resin solids was 31.1%.

### Example 2:

232.16g of Acclaim 4200 (PPO ether diol, 4K M.wt.), 26.12 g of Acclaim 6300 (PPO ether triol, 6K M.wt.), 34.0 g of DMBA (dimethylol butanoic acid) and 20.82 g NMP were charged into 3 neck round bottom 1 liter flask equipped with heating mantle, condenser, stirring rod and nitrogen outlet. Mixture was heated to 85°C until became clear homogenous liquid. 62.39 g of Desmodur I ( isophorone diisocyanate) and 20.2 g of Desmodur H (hexamethylene diisocyanate ) were added into the reaction flask at 75C. The mixture turned turbid immediately. Reaction proceeded at 90°C until % NCO reached theoretical NCO of 2.3%. Neutralization step with addition of 23.5 g of triethylamine (TEA) was performed at 57°C. Prepolymer then was dispersed into warm distilled water at 40C. Coarse dispersion was obtained. Chain extension solution consisting of 5.6 g of ethylene diamine and 15.5 g of distilled water was added dropwise into dispersion at 47°C. The resultant PUD had 38.8 % solids and viscosity of 1.4 Pa.s (1400 cps). PUD turned into a paste within a week of storage at room temperature.

### Film properties

:
Tensile strength 101.7 bar (1476 psi)
Modulus at 100% elongation 50.7 bar (736 psi)
Ultimate elongation 453%
Tear strength 22.1 N/mm (126 pli)

Incorporation of the soft segment (high molecular weight polyether diol and triol) without a compatibilizer caused poor solvency of hard segment represented by dimethylolbutanoic acid (DMBA) and isocyanates in the soft segment. Hard segment content on total resin solids was 22.8%.

### Example 3:

232.16 g of Acclaim 4200 and 13.66 g of Acclaim 6300 were charged into 3 neck round bottom 1 liter flask equipped with heating mantle, condenser, stirring rod and nitrogen outlet. 2.66 g of castor oil (OH number 134.9), 31.85 g of DMBA (dimethylol butanoic acid) was added at 100°C with 56.4 g of NMP. 63.38 g of Desmodur I (isophorone diisocyanate) and 20.54 g of Desmodur H (hexamethylene diisocyanate) were added into the reaction flask at 88°C. The mixture turned turbid immediately but cleared up within 10 minutes after addition of the isocyanate. Reaction proceeded at 96°C until % NCO reached 2.61 %; theoretical NCO was calculated at 2.58%. 23.14 g of triethylamine (TEA) was added at 64C. Prepolymer then was dispersed into distilled water of ambient temperature containing 0.5 g of external surfactant, Surfanol 104H. Fine dispersion was formed. Chain extension stage proceeded with a dropwise addition of the chain extension solution consisting of 6.17g of EDA and 50 g of distilled water.

Final PUD had 40% solids, average particle size 200nm

### Film properties:

Tensile strength 67.0 bar (973 psi)
Strength at 100% modulus 28.9 bar (419 psi)
Ultimate elongation 807 %
Tear strength 39.1 N/mm (223 pli)

Use of castor oil as a compatibilizer improved hard segment solubility in the soft segment of the prepolymer. Hard block content on total resin solids was 32.8%.

### Example 4:

21.4 g of Arcol PPG 425, 206.0 g of Acclaim 4200 and 26.1 g of Acclaim 6300 were charged into one liter round bottom three-neck flask equipped with a thermocouple, heating mantle and a stirrer. Dehydrated polyols for one hour at 120°C under 10 mbar vacuum. Added 11.21g of DMBA at 110°C. After mixture became clear homogenous liquid, added 53.3 g of Desmodur I (isophorone diisocyanate) and 15.96 g of Desmodur H (hexamethylene diisocyanate) were added into the reaction flask at 80°C. The mixture remained clear after isocyanates addition.. Reaction proceeded at 95°C until % NCO reached 3.27%; theoretical NCO was calculated at 3.81 %. 7.65 g of triethylamine (TEA) was added at 70°C. Prepolymer then was dispersed into distilled water of ambient temperature containing 0.2 g of external surfactant, Surfanol 104H. A fine dispersion was formed. Chain extension stage proceeded with a dropwise addition of the chain extension solution consisting of 4.35g of EDA and 47 g of distilled water.

A fine stable dispersion was obtained. Viscosity was 0.05 Pa.s (50 cps). Solids - 41 %.

Ave particle size ---2.2 microns, bimodal distribution.

Use of Arcol PPG 425 (425 molecular weight polypropylene glycol ether) as a compatibilizer improved compatibility between soft and hard segments of the prepolymer. Hard block content on total resin solids was 32.4%.

This PUD was formulated into a sealant with 20% Ca carbonate filler, 20% plasticizer and 60% PUD.

### PUD film properties:

**Ultimate tensile strength 2051 psi**
Ultimate elongation 692 %
Strength at 100% modulus 26.7 bar (387 psi)
Tear strength 34.7 N/mm (198 pli)

The PUD formulated into a sealant possessed the following properties:
Tensile strength 32.2 bar (467 psi)
Strength at 100% modulus 18.7 bar (272 psi)
Ultimate elongation 320 %
Tear strength 7.5 (N/mm (43 pli)

### Example 5:

21.8 g of Arcol PPG 425, 206.0 g of Acclaim 4200 were charged into one liter round bottom three-neck flask equipped with a thermocouple, heating mantle and a stirrer. Dehydrated polyols for one hour at 120°C under 10 mbar vacuum. Added 10.96 g of DMBA at 110°C. After mixture became clear homogenous liquid, added 46.66 g of Desmodur I ( isophorone diisocyanate) and 15.37 g of Desmodur H ( hexamethylene diisocyanate ) were added into the reaction flask at 75°C. The mixture remained clear after isocyanates addition.. Reaction proceeded at 95°C until % NCO reached 3.25 %; theoretical NCO was calculated at 3.53 %. 7.49 g of triethylamine (TEA) was added at 70C. Prepolymer then was dispersed into distilled water of ambient temperature containing 0.2 g of external surfactant, Surfanol 104H. Fine dispersion was formed. Chain extension stage proceeded with a dropwise addition of the chain extension solution consisting of 6.5 g of EDA and 50 g of distilled water.

Fine stable dispersion was obtained. Viscosity was 0.48 Pa.s (480 cps). Solids - 39.51%. Ave particle size ---1.19 microns, bimodal distribution.

Hard block content was 25.4% on total resin solids.

### PUD film properties:

Ultimate Tensile strength 176.8 bar (2565.8 psi)
Strength at 100% modulus 23.0 bar (333 psi)
Ultimate elongation 867 %
Tear strength 33.8 N/mm (193.4 pli)

A sealant based on this PUD was formulated using 33% filler, 33% PUD and 33% plasticizer.

### Sealant properties:

Tensile strength 14.0 bar (203 psi)
Strength at 100% modulus 8.0 bar (115 psi)
Ultimate elongation 512 %
Tear strength 6.7 N/mm (38 pli)

### Example 6:

232.16g of Acclaim 4200 (PPO ether diol, 4K M.wt.), 26.12 g of Acclaim 6300 (PPO ether triol, 6K M.wt.) were dewatered at 115C under vacuum for one hour. At 110C, 5.19g of DMBA (dimethylol butanoic acid) was charged into the mixture and stirred for 30min in 3 neck round bottom 1 liter flask equipped with heating mantle, condenser, stirring rod and nitrogen outlet. 44.78 g of Dicap 600 Mixture (polycaprolactone polyester diol with a pendant carboxylic group, 600 Mol.wt.) was added into the reaction flask at 95C - mixture remained clear and homogenous liquid. 44.44 g of Desmodur I ( isophorone diisocyanate) and 14.28 g of Desmodur H (hexamethylene diisocyanate ) were added into the reaction flask at 59C. The mixture remained clear. Reaction proceeded at 70C until % NCO reached theoretical NCO of 2.3%. Neutralization step was performed with addition of 11.23 g of triethylamine (TEA) into dispersing water at 25C. 10 drops of Surfanol 104 ( dispersing aid) was also added into water at RT. Prepolymer then was dispersed into warm distilled water at 30C. Fine stable dispersion was obtained. Chain extension solution consisting of 5.94 g of ethylene diamine and 15.5 g of distilled water was added dropwise into dispersion at 38C. Resultant dispersion had 42% solids, viscosity of 0.11 Pa.s (110 cps).

Whereas particular embodiments of this invention have been described above for purposes of illustration, it will be evident to those skilled in the art that numerous variations of the details of the present invention may be made.

**Table 1**

| **Sealant Formulations** | | | | | | | |
|---|---|---|---|---|---|---|---|
| Example | Tensile (bar) | % Elongation | 100% Modulus (bar) | Tear (N/mm) | Filler (wt. %) | PUD (wt. %) | Plast (wt. %) |
| PUD From Ex. 4. | 32.2 | 320.00 | 19.2 | 7.5 | 20.00 | 60.00 | 20.00 |
| PUD from Ex. 5 | 18.7 | 205.40 | 16.9 | 6.8 | 29.41 | 49.02 | 19.61 |
| PUS from Ext. 5 | 23.9 | 361.30 | 20.4 | 17.1 | 35.90 | 41.50 | 20.50 |
| PUD from Ex. 6 | 13.9 | 276 | 11.4 | 3.8 | 26 | 52 | 17 |

**Table 2**

| **Sealant Formulations (all numbers in weight percent)** | | | | | | | | | |
|---|---|---|---|---|---|---|---|---|---|
| Example | PUD | Plasticizer (Santicizer 160) | Plasticizer (Unimoll BB) | Dispersing Agent (Triton X-405) | Dispersing Agent (Tamol 850) | Mineral Spirits | Filler (Drikalite) | Thixotrope (Cellosize ER-15M) | Water |
| PUD from Ex. 4 | 60 | 0 | 20 | 0.6 | 0.2 | 1.2 | 20 | 0 | 2.5 |
| PUD from Ex. 5 | 41.48 | 0 | 20.53 | 0.62 | 0.205 | 1.23 | 35.93 | 0 | 0 |
| PUD from Ex. 5 | 50 | 0 | 20 | 0.6 | 0.2 | 1.2 | 30 | 0 | 0 |
| PUD from Ex. 6 | 52.4 | 17.46 | 0 | 0.52 | 0.17 | 1.05 | 26.2 | 0.17 | 2.03 |

**Table 3 Sealant Formulations**

| Formulation | #1 | #2 | #3 |
|---|---|---|---|
| **PUD from Example 5** | 39.68 | 36.1 | 33.11 |
| Calcium Carbonate | 39.68 | 36.1 | 33.11 |
| Unimol BB | 19.84 | 27.08 | 33.11 |
| Tamol 850 | 0.2 | 0.18 | 0.17 |
| Triton X-405 | 0.2 | 0.54 | 0.5 |

**Table 4**

| **PUD Sealant Formulations Compared to Standard Acylic-Based Sealants** | | | | | |
|---|---|---|---|---|---|
| | #1 | #2 | #3 | Acrylic 1 | Acrylic 2 |
| Tensile Strength, bar | 21.7 | 15.5 | 11.0 | 5.2 | 3.4 |
| Strengthat 100% modulus, bar | 17.2 | 10.3 | 3.8 | 5.0 | 2.4 |
| Tear Resistance, N/mm | 17.5 | 12.3 | 10.5 | 2.8 | 7.0 |
| Elongation % | 400 | 500 | 720 | 100 | 465 |
| Hardness, Shore A | | 35 | 27 | 65 | 30 |
| Hardness, 5 sec. | | 34 | 22 | 30 | 15 |

The following compositions were used for comparison in the above table (Table 4):

| Trade name | Manufacturer | Type | Hardness 00 | Hardness A | (bar) Tensile | Elong. (%) | Tear (N/mm) |
|---|---|---|---|---|---|---|---|
| Alex Plus (acrylic 1) | DAP | Acrylic latex plus silicon | 718A | 93/90 | 4.5/2.2 | 149.3 | 5.8 |
| Dynaflex 230 (acrylic 2) | DAP | Latex caulk | 718B | 80/75 | 2.2/1.0 | 510 | 3.2 |

## Claims

1. An aqueous polyurethane dispersion prepared from an isocyanate-terminated prepolymer having an isocyanate group content of 2 to 7% by weight, the prepolymer comprising the reaction product of
a) at least one polyether diol having a number average molecular weight of 3000 to 5000;
b) at least one active-hydrogen containing material having a number average molecular weight of 200 to 700 and containing two or three hydroxyl groups and optionally one carboxy group;
c) at least one hydroxyalkane carboxylic acid having a number average molecular weight of less than 200;
d) optionally, a polyether monol having a number average molecular weight between 400-3,000;
e) optionally, a polyether triol having a number average molecular weight of 3,000 to 9,000; and
f) an aliphatic and/or cycloaliphatic diisocyanate,
the aqueous polyurethane dispersion being optionally chain extended and having at least a portion of any carboxylic acid groups neutralized.

2. The aqueous polyurethane dispersion of claim 1, wherein the components a), b) and c) are present in the following amounts: (a) 30 - 80 wt.%, (b) 3 - 15 wt. %, (c) 1 - 20 wt. %, based on the weight of the prepolymer.

3. The aqueous polyurethane dispersion of claim 1, wherein component d) is present in amounts between 2 - 5 wt.%.

4. The aqueous polyurethane dispersion of claim 1, wherein component e) is present in amounts between 2 - 10 wt.%.

5. The aqueous polyurethane dispersion of claim 1, wherein the isocyanate group content of the prepolymer is between 2 - 7 wt.%

6. The aqueous polyurethane dispersion of claim 1, wherein the MW of the monol is between 1500 and 2500.

7. The aqueous polyurethane dispersion of claim 1, wherein the MW of the triol is between 5000 and 7000.

8. The aqueous polyurethane dispersion of claim 1, wherein the carboxylic acid of component (c) is selected from the group consisting of dimethylolacetic acid, dimethylolpropionic acid, dimethylolbutyric acid, dimethylolvaleric acid, citric acid and tartaric acid.

9. A process for preparing an aqueous polyurethane dispersion comprising:
A) preparing an isocyanate-terminated prepolymer having an isocyanate group content of 2 to 7% by weight, the prepolymer comprising the reaction product of
a) at least one polyether diol having a number average molecular weight of 3000 to 5000;
b) at least one active-hydrogen containing material having a number average molecular weight of 200 to 700 and containing two or three hydroxyl groups and optionally one carboxy group;
c) at least one hydroxyalkane carboxylic acid having a number average molecular weight of less than 200;
d) optionally, a polyether monol having a number average molecular weight between 400-3,000;
e) optionally, a polyether triol having a number average molecular weight of 3,000 to 9,000; and
f) an aliphatic and/or cycloaliphatic diisocyanate;
B) neutralizing at least a portion of any carboxylic acid groups with a neutralizing agent; and
C) dispersing the prepolymer in water;
D) optionally adding a polyamine chain extender to the water after addition of the prepolymer.

10. A sealant composition comprising the aqueous polyurethane dispersion of Claim 9.

11. A substrate coated with the sealant composition of Claim 10.

## Patentansprüche

1. Wässrige Polyurethandispersion, hergestellt aus einem isocyanatterminierten Prepolymer mit einem Isocyanatgruppengehalt von 2 bis 7 Gew.-%, wobei das Prepolymer das Reaktionsprodukt von
a) mindestens einem Polyetherdiol mit einem zahlenmittleren Molekulargewicht von 3000 bis 5000;
b) mindestens einer aktiven Wasserstoff enthaltenden Substanz mit einem zahlenmittleren Molekulargewicht von 200 bis 700 und zwei oder drei Hydroxylgruppen und gegebenenfalls einer Carboxygruppe;
c) mindestens einer Hydroxyalkancarbonsäure mit einem zahlenmittleren Molekulargewicht von weniger als 200;
d) gegebenenfalls einem Polyethermonool mit einem zahlenmittleren Molekulargewicht zwischen 400-3000;
e) gegebenenfalls einem Polyethertriol mit einem zahlenmittleren Molekulargewicht von 3000 bis 9000 und
f) einem aliphatischen und/oder cycloaliphatischen Diisocyanat
umfasst, wobei die wässrige Polyurethandispersion gegebenenfalls kettenverlängert ist und mindestens ein Teil jeglicher Carbonsäuregruppen neutralisiert ist.

2. Wässrige Polyurethandispersion nach Anspruch 1, wobei die Komponenten a), b) und c) in den folgenden Mengen vorliegen: (a) 30-80 Gew.-%, (b) 3-15 Gew.-%, (c) 1-20 Gew.-%, bezogen auf das Gewicht des Prepolymers.

3. Wässrige Polyurethandispersion nach Anspruch 1, wobei Komponente d) in Mengen zwischen 2-5 Gew.-% vorliegt.

4. Wässrige Polyurethandispersion nach Anspruch 1, wobei Komponente e) in Mengen zwischen 2-10 Gew.-% vorliegt.

5. Wässrige Polyurethandispersion nach Anspruch 1, wobei der Isocyanatgruppengehalt des Prepolymers zwischen 2-7 Gew.-% liegt.

6. Wässrige Polyurethandispersion nach Anspruch 1, wobei das MG des Monools zwischen 1500 und 2500 liegt.

7. Wässrige Polyurethandispersion nach Anspruch 1, wobei das MG des Triols zwischen 5000 und 7000 liegt.

8. Wässrige Polyurethandispersion nach Anspruch 1, wobei die Carbonsäure von Komponente (c) aus der Gruppe bestehend aus Dimethylolessigsäure, Dimethylolpropionsäure, Dimethylolbuttersäure, Dimethylolvaleriansäure, Citronensäure und Weinsäure ausgewählt ist.

9. Verfahren zur Herstellung einer wässrigen Polyurethandispersion, bei dem man:
A) ein isocyanatterminiertes Prepolymer mit einem Isocyanatgruppengehalt von 2 bis 7 Gew.-% herstellt, wobei das Prepolymer das Reaktionsprodukt von
a) mindestens einem Polyetherdiol mit einem zahlenmittleren Molekulargewicht von 3000 bis 5000;
b) mindestens einer aktiven Wasserstoff enthaltenden Substanz mit einem zahlenmittleren Molekulargewicht von 200 bis 700 und zwei oder drei Hydroxylgruppen und gegebenenfalls einer Carboxygruppe;
c) mindestens einer Hydroxyalkancarbonsäure mit einem zahlenmittleren Molekulargewicht von weniger als 200;
d) gegebenenfalls einem Polyethermonool mit einem zahlenmittleren Molekulargewicht zwischen 400-3000;
e) gegebenenfalls einem Polyethertriol mit einem zahlenmittleren Molekulargewicht von 3000 bis 9000 und
f) einem aliphatischen und/oder cycloaliphatischen Diisocyanat
umfasst;
B) mindestens einen Teil jeglicher Carbonsäuregruppen mit einem Neutralisationsmittel neutralisiert und
C) das Prepolymer in Wasser dispergiert;
D) gegebenenfalls nach der Zugabe des Prepolymers ein Polyamin-Kettenverlängerungsmittel zu dem Wasser gibt.

10. Dichtstoffzusammensetzung, umfassend die wässrige Polyurethandispersion nach Anspruch 9.

11. Substrat, das mit der Dichtstoffzusammensetzung nach Anspruch 10 beschichtet ist.

## Revendications

1. Dispersion aqueuse de polyuréthane préparée à partir d'un prépolymère à terminaisons isocyanate ayant une teneur en groupes isocyanate de 2 % à 7 % en poids, le prépolymère comprenant le produit réactionnel de
a) au moins un polyéther diol ayant une masse moléculaire moyenne en nombre de 3 000 à 5 000 ;
b) au moins un matériau contenant de l'hydrogène actif, ayant une masse moléculaire moyenne en nombre de 200 à 700 et contenant deux ou trois groupes hydroxyle et éventuellement un groupe carboxyle ;
c) au moins un acide hydroxyalcane carboxylique ayant une masse moléculaire moyenne en nombre inférieure à 200 ;
d) éventuellement, un polyéther monool ayant une masse moléculaire moyenne en nombre de 400 à 3 000 ;
e) éventuellement, un polyéther triol ayant une masse moléculaire moyenne en nombre de 3 000 à 9 000 ; et
f) un diisocyanate aliphatique et/ou cycloaliphatique,
la dispersion aqueuse de polyuréthane pouvant éventuellement avoir subi une extension de chaîne et au moins une partie de tous les groupes d'acide carboxylique qu'elle peut contenir ayant été neutralisés.

2. Dispersion aqueuse de polyuréthane selon la revendication 1, dans laquelle les composants a), b) et c) sont présents dans les quantités suivantes : (a) 30 % à 80 % en poids, (b) 3 % à 15 % en poids, (c) 1 % à 20 % en poids, relativement au poids du prépolymère.

3. Dispersion aqueuse de polyuréthane selon la revendication 1, dans laquelle le composant d) est présent dans des quantités de 2 % à 5 % en poids.

4. Dispersion aqueuse de polyuréthane selon la revendication 1, dans laquelle le composant e) est présent dans des quantités de 2 % à 10 % en poids.

5. Dispersion aqueuse de polyuréthane selon la revendication 1, dans laquelle la teneur en groupes isocyanate du prépolymère est de 2 % à 7 %.

6. Dispersion aqueuse de polyuréthane selon la revendication 1, dans laquelle la masse moléculaire du monool est de 1 500 à 2 500.

7. Dispersion aqueuse de polyuréthane selon la revendication 1, dans laquelle la masse moléculaire du triol est de 5 000 à 7 000.

8. Dispersion aqueuse de polyuréthane selon la revendication 1, dans laquelle l'acide carboxylique du composant c) est sélectionné dans le groupe constitué de l'acide diméthylolacétique, de l'acide diméthylolpropionique, de l'acide diméthylolbutyrique, de l'acide diméthylolvalérique, de l'acide citrique et de l'acide tartrique.

9. Procédé de préparation d'une dispersion aqueuse de polyuréthane, consistant à :
A) préparer un prépolymère à terminaisons isocyanate ayant une teneur en groupes isocyanate de 2 % à 7 % en poids, le prépolymère comprenant le produit réactionnel de
a) au moins un polyéther diol ayant une masse moléculaire moyenne en nombre de 3 000 à 5 000 ;
b) au moins un matériau contenant de l'hydrogène actif, ayant une masse moléculaire moyenne en nombre de 200 à 700 et contenant deux ou trois groupes hydroxyle et éventuellement un groupe carboxyle ;
c) au moins un acide hydroxyalcane carboxylique ayant une masse moléculaire moyenne en nombre inférieure à 200 ;
d) éventuellement, un polyéther monool ayant une masse moléculaire moyenne en nombre de 400 à 3 000 ;
e) éventuellement, un polyéther triol ayant une masse moléculaire moyenne en nombre de 3 000 à 9 000 ; et
f) un diisocyanate aliphatique et/ou cycloaliphatique ;
B) neutraliser au moins une partie de tous les groupes d'acide carboxylique pouvant être présents avec un agent de neutralisation ; et
C) disperser le prépolymère dans de l'eau ;
D) éventuellement, ajouter un agent d'extension de chaîne polyamine à l'eau après l'addition du prépolymère.

10. Composition d'étanchéité comprenant la dispersion aqueuse de polyuréthane selon la revendication 9.

11. Substrat revêtu de la composition d'étanchéité selon la revendication 10.
